# EUROPEAN PATENT SPECIFICATION

(11) **EP 2 103 224 B1**
(45) Date of publication and mention of the grant of the patent: **25.09.2013**
(21) Application number: 09003819.1
(22) Date of filing: 17.03.2009
(51) Int. Cl.: A23K 1/00, A23K 1/16

(54) **A high-energy feed pellet based on natural materials and a method for the preparation thereof**
Energiereiches Futtermittelpellet, das auf natürlichen Substanzen basiert, und Verfahren zu dessen Herstellung
Granulé d'alimentation haute énergie basé sur des matériaux naturels et son procédé de préparation

(30) Priority: 17.03.2008 NL 1035180
(43) Date of publication of application: 23.09.2009
(73) Proprietor: Agrifirm Group B.V., 7324 AE Apeldoorn (NL)
(72) Inventor: Van Poppel, Franciscus Josephus Johannes, 6081 EA Haelen (NL); Zwolschen, Johannes Willem, 5462 GE Veghel (NL)
(74) Representative: Blokland, Arie

(56) References cited:
- EP-A- 0 479 555
- EP-A- 0 579 095
- EP-A- 1 570 748
- WO-A-02/24000
- WO-A-2006/098629
- US-A- 3 993 796
- US-A- 4 225 630

## Description

The present invention relates to a high-energy feed pellet based on natural materials wherein the total fat percentage of the feed pellet is more than 15 wt.%. The invention also relates to a method for the preparation of such a feed pellet and the use thereof.

Disadvantages of known feed pellets obtained through compression are that they have a high density and that compression cannot be used to obtain feed pellets having a high fat content while retaining desired properties. The feed pellets will be less well digested, resulting in non-optimum feed conversion. In addition, there will be the problem of the feed pellets adhering to one another during storage and transport, which is undesirable.

One object of the present invention is to provide a feed pellet that effects increased feed conversion, viz. better feed utilisation, in the animal, so that less feed need be used to effect the same increase in body weight.

Another object of the present invention is to provide a feed pellet that improves the condition of the animals to be fed and also reduces manure production.

Yet another object of the present invention is to provide a feed pellet having a high energy value that can be well digested by the animals.

One or more of the above objects is/are achieved by a feed pellet according to the introduction characterised in that the feed pellet has a density of at most 700 g/l, and a swelling capacity of at least 40 ml after 30 minutes, based on 50 g of feed pellets.

A feed pellet based on natural materials is already known from European patent application EP 1 570 748 of the present inventors. Such feed pellets are produced by using so-called Universal Pressure Cooking (UPC®) techniques. The present inventors have so far found that it is possible to obtain such feed pellets having a total fat percentage of at most 15 wt.%. This fat percentage was obtained by adding one or more fats during the production of the feed pellets.

International publication WO 2006/098629 A1 discloses a process for the manufacture of feed for aquaculture species. Said feed product is in the form of pellets and the major part of the water and lipids are present in the form of a gel or emulsion in the pores of an intermediate product containing the proteins, minerals, and minor amounts of water and lipids.

International publication WO 02/24000 A1 discloses a method and plant for producing feed pellets having a relatively high content of fat, for example in the form of added oil. Said feed pellets are for fish and animals.

The present inventors have carried out extensive research to find out whether it is possible to further increase the fat percentage in order to further increase the energy value of the feed pellets without compromising the other properties. A compromise must hence be found between increasing the fat content on the one hand and retaining properties such as swelling capacity, sedimentation value and preferably a sufficiently low density. Increasing the fat content is advantageous from the viewpoint of increasing the energy value, but when the fat content is increased, the density of feed pellets formed through compression is also increased, which is disadvantageous because it will result in non-optimum digestion (see also below). Increasing the fat content will moreover generally lead to a reduction in the swelling capacity and an increase in the sedimentation value, which is disadvantageous as this will result in non-optimum digestion (see also below). The present inventors' extensive research has surprisingly shown that it is possible to provide feed pellets having a total fat percentage of more than 15 wt.% while retaining the other desired properties (such as swelling capacity and sedimentation value) by processing the feed pellets using the UPC® method, with the fat content being increased by adding fat in the form of a fat-containing composition in a vacuum-coating device.

The feed pellets according to the present invention have a density, also referred to as 'bulk density', that is dependent on the total fat percentage. A feed pellet according to the present invention having a total fat percentage of at most 20 wt.% preferably has a density ranging between about 580 and about 630 grams per litre. A feed pellet according to the present invention having a total fat percentage of more than 20 wt.% and at most 30 wt.% preferably has a density ranging between about 630 and about 700 grams per litre. Because the present feed pellets have a sufficiently low density in relation to their high fat and energy contents, an optimum chime will be obtained in the stomach with the available digestive juices and water. This way better utilisation of the present feed pellet is achieved, resulting in a faster increase in body weight. All this results in improved utilisation of the feed, because less feed will suffice due to the fact that the animals will utilise this high-energy feed better, and this will imply a farm-economic advantage, but also an environmental advantage, because less manure will be produced and less nitrogen and phosphorus will be passed out.

In one embodiment it is preferable for the total fat percentage to be at most 30 wt.%, as the feed value will then be optimum.

The total fat percentage preferably ranges between 20 and 30 wt.% for an optimum energy value.

In another embodiment it is preferable for the total fat percentage to be at most 20 wt.%. This may for example be an embodiment in which it is important that the density of the feed pellet is less than 630 g/l, for example a feed pellet having a density of at most 580 g/l. This will depend on the desired use of the feed.

The present invention moreover relates to a method for the preparation of a high-energy feed pellet based on natural materials in which the starting materials are mixed and processed to obtain a feed pellet, characterised in that the method comprises the following steps:
a) providing a starch-containing composition having an average particle size of 200-650 µm;
b) bringing the composition of step a) into contact with a certain amount of supplementary components;
c) extruding the product obtained in step b) to obtain a feed pellet;
d) introducing a fat-containing composition into the feed pellet obtained in step c) in a vacuum; and
e) bringing the feed pellet obtained in step d) to atmospheric pressure in order to obtain the high-energy feed pellet having a total fat percentage of more than 15 wt.%.

The average particle size ranging between 200 and 650 µm mentioned in step a) is particularly desirable for obtaining a homogeneous mass, which is necessary to ensure good processability during the extrusion step c). If an average particle size of more than 650 µm is used, a less homogeneous mixture will be obtained, which will make step c) more difficult. If on the contrary an average particle size of less than 200 µm is used, there will be a greater risk of blockage during step c), which is undesirable.

The supplementary components mentioned in step b) are preferably selected from the group consisting of water, steam, fat, molasses, vinasse, milk products, potato starch and wheat starch, or a combination thereof. The amount of these supplementary components is preferably selected so that the feed pellet ultimately obtained preferably has a starch content of at least 25 wt.%, preferably at least 35 wt.%, based on the weight of the feed pellet.

Steps b) and c) of the method according to the present invention may be carried out in two separate devices or in a single device. If steps b) and c) are both carried out in a single device they are carried out in an extruder, which preferably comprises at least two zones having different temperatures. Step b) will be carried out in the first zone having a lower temperature, after which the extrusion step c) will be carried out in a second zone at a higher temperature. The method is preferably carried out in a so-called Universal Pressure Cooker®.

The product obtained in step b) preferably has a water content ranging between 10 and 20 wt.% with a view to the processability of the product in the subsequent steps of the method. A product having a water content of less than 10 wt.% will not be sufficiently processable and will result in feed pellets that are too dry, whereas a water content of more than 20 wt.% will result in a product that is too wet, which will be difficult to process in step c).

The feed pellets obtained in step c) are preferably cooled and/or dried before being used in the next step of the method. After step c) the feed pellet is preferably cooled to a temperature of 20-35 °C.

The fat-containing composition introduced in step d) is preferably introduced in a liquid form, to simplify its introduction and obtain a homogeneous product. The use of underpressure makes it possible for the greatest part possible, preferably almost all, of the fat-containing composition to penetrate pores at the surface of the feed pellet. The degree of impregnation or penetration of the fat-containing composition in the pores of the feed pellet will depend on various factors, for example the porosity of the feed pellet, the strength of the employed vacuum, the liquidity of the fat-containing composition and the like. This way a fat-impregnated feed pellet containing a fat-containing composition is obtained. The advantage of (partial) impregnation of the fat-containing composition in the pores of the feed pellet is improved transport properties of the feed pellet from production to the feeder, and hence the animal to be fed. Storage and transport are very critical, and in the case of a "fatty" feed pellet, viz. a feed pellet with which a significant amount of the fat-containing composition is contained on the outer surface of the feed pellet, problems may occur in the form of fouling of the transport systems and blockage of the storage silos. A higher degree of impregnation, and hence a feed pellet having a less "fatty" appearance, will moreover improve acceptance by the animals.

Preferably at least 80 wt.%, more preferably at least 90 wt.%, in particular at least 95 wt.% and above all at least 99 wt.% of the fat-containing composition will penetrate the pores of the feed pellet because then a "fatty" appearance of the feed pellet will be optimally prevented, and hence the aforementioned problems concerning transport and storage, and acceptance by the animals will be optimum.

In a preferred embodiment of the present method an extra step, f), is carried out after step c), comprising bringing the feed pellet obtained in step c) into contact with one or more supplementary components. These supplementary components will be explained below. By carrying out this step f) the feed value of the present feed pellet can be further increased.

In another embodiment of the present method, bringing the product to atmospheric pressure in step e) is carried out step by step. It is possible to add one or more supplementary components during this step e). Increasing the pressure in a number of steps from reduced pressure to atmospheric pressure will create the possibility of adding several different supplementary components having specific properties. The desired number of supplementary components that are to be added will determine the number of steps in which the pressure is to be increased. The supplementary components may be added separately or combined, and are preferably added in a liquid form or as a solution in one or more solvents, as will be explained further below.

The swelling capacity of the high-energy feed pellet according to the present invention is preferably at least 40 ml after 30 minutes, more preferably at least 30 ml after 20 minutes, in particular at least 20 ml after 10 minutes, based on 50 g of feed pellets. The swelling capacity is determined by using the analytical method described below. It is particularly important that the swelling capacity is high for the first ten minutes, because this indicates how fast the feed pellets will increase in volume in the animal's stomach. A large increase in volume of the feed pellets in the animal's stomach will ensure that the animal will feel sated. The higher the swelling capacity, in particular in the initial period, the sooner the animal will feel sated. Because the animal will feel sated sooner it will consume less feed per unit of time.

The sedimentation value of the feed pellet in water is preferably at most 60 ml after 30 minutes, based on 50 g of feed pellets. The sedimentation value is determined by using the analytical method described below. Such a sedimentation value indicates that the feed pellets will form a reasonably stable suspension. Such a reasonably stable suspension of the feed pellets indicates that the feed pellets will be well digested.

In another preferred embodiment the sedimentation value of the feed pellet is at most 25 ml after 30 minutes, based on 50 g of feed pellets. In this case the total fat percentage of the feed pellet will usually be 15-20 wt.%. A sedimentation value of at most 25 ml after 30 minutes indicates that the feed pellets will form a stable suspension in water, from which it may be inferred that a stable suspension will also be formed in the animal's stomach, which suspension will not, or virtually not, settle. A stable suspension of the feed pellets indicates that the feed pellets will be optimally digested. Optimum digestion represents the most complete possible absorption of nutrients. The consequences are an improved general condition of the animal, a greater increase in the animal's weight and also a decrease in the total amount of feed consumed.

The fat-containing composition that is introduced in step d) preferably contains a fat selected from the group consisting of animal fats, animal oils, vegetable oils and vegetable fatty acids, and one or more combinations hereof. Examples of animal fats are beef fat, tallow, poultry fat, pig fat, lard and milk fat. An example of an animal oil is fish oil. Examples of vegetable oils are rapeseed oil, soy oil, sunflower oil, palm oil, safflower oil, coconut oil, palm kernel oil, sesame oil, groundnut oil, cottonseed oil, maize oil and olive oil. Examples of vegetable fatty acids are fatty acids of rapeseed oil, sunflower oil, palm oil and palm kernel oil. The aforementioned fats and/or oils can also be used as supplementary components. Other vegetable and/or animal fats and/or oils may also be used.

Which one is to be selected will depend on the desired use and the availability of the raw material.

In one embodiment of the present invention the fat content of the fat-containing composition is at least 75 wt.%, preferably at least 85 wt.%, in particular at least 95 wt.% and above all at least 99 wt.%. The advantage of this is that this way the greatest possible amount of fat can be added to the feed pellet. In addition, one or more of the supplementary components to be mentioned below may be present in the fat-containing composition.

In one embodiment of the present invention the fat-containing composition contributes at least 50%, preferably at least 70%, in particular at least 80% and above all at least 90% to the total fat content of the feed pellet. The total fat content of the feed pellet consists of a combination of the fat content of the raw materials used in step a), the fat content of the supplementary components that are added in step c) and optionally step f) and the fat content of the fat-containing composition that is added in step d). The advantage of the fact that the fat-containing composition contributes at least 50% of the total fat content of the feed pellet is that the fat percentage of the raw materials and any supplementary components may consequently be minimised while the total fat percentage remains unchanged. A low fat percentage of the raw materials and the supplementary components will ensure better processability of the feed pellet, in particular during the extrusion in step c).

The greater the contribution of the fat-containing composition to the total fat percentage, the lower the fat percentage of the raw materials and the supplementary components may be, which is advantageous, as described above.

In a preferred embodiment of the present invention the energy value (EV) per kilogram of feed pellets of the present feed pellet is at least 1.25, preferably at least 1.55, in particular at least 1.70 and above all at least 1.85 or even 2.00. A Dutch feed-evaluation system has been formulated for pigs on the basis of various parameters, viz. Intestinally digestible Lysine (Id Lys) and Energy Value (EV). One Energy Value (EV) unit corresponds to 2100 kilocalories (8792 kJ). The energy value is calculated as the sum of the energy values of the individual raw materials multiplied by the processed amount of the raw material concerned. The energy value of a raw material is calculated using a specific formula for each raw material, with which the so-called Weende factors (crude protein, crude fat, crude fibre, starch, sugar, crude ash) are multiplied by specific factors. Such formulas have been defined for each raw material and/or group of raw materials by means of animal research. The energy value of a certain raw material also depends on the quality of such a raw material. Such formulas are known, and will therefore not be explained further here. There is no linear relationship between the total fat percentage and the energy value, but a higher fat content usually does mean a higher energy value.

The advantage of such a high energy value is that the animals that are fed with the high-energy feed pellets will gain more weight per kilogram of feed consumed. This means that the feed conversion, or feed utilisation, will improve.

It is preferable for the composition of step a) to contain one or more raw material(s) selected from the group consisting of wheat, wheat middlings, wheat gluten (feed meal), oats, barley, rye, tapioca, maize, maize gluten, potato, rice, molasses, vinasse, extracted soymeal, palm kernel meal, extracted sunflower seed, extracted rapeseed, rapeseed expellers, triticale, beet pulp, bakery products (such as stale bread and cake from bakers, supermarkets and the like), so-called "Dried Distillers Grains with Solubles" (DDGS, a side-product rich in protein obtained in the production of bioethanol), animal meal (products obtained from waste streams of the meat-processing industry), animal and vegetable fats and oils and minerals. Other raw materials that are commonly used in animal feeds may of course also be used in the feed pellet and the method according to the present invention.

In another embodiment of the present method one or more supplementary components is/are added to the composition in one or more of steps b), d), e) and/or f). One or more supplementary components is/are in step b) added to the starch-containing composition of step a) before the product is extruded. One or more supplementary components may also be added to the fat-containing composition that is added in step d) or while the product is being brought to atmospheric pressure in step e). It is moreover also possible for the product obtained in step c) to be brought into contact with one or more supplementary components (in a step f)) first, before the fat-containing composition is added in step d). It is of course also possible to use a combination of the aforementioned embodiments.

The one or more supplementary components is/are preferably selected from the group consisting of water, steam, fat, molasses, vinasse, milk products, potato starch and wheat starch, or enzymes, vitamins, antioxidants, pigments, flavourings, carotenoids, synthetic amino acids, organic acids, extracted rapeseed, extracted soymeal, animal meal, coccidiostatics, antimicrobial growth promoters, trace elements, veterinary drugs and fatty acids, in particular fatty acids having an average chain length of 6-12 carbon atoms. The use of such supplementary components will depend on the ultimate use of the feed, and will vary for different purposes, for example for young animals, older animals, nursing animals, meat-producing animals and the like.

The one or more supplementary components that is/are to be added is/are preferably contained in a solvent selected from the group consisting of animal fat, vegetable oil, glycerol, water, organic solvent and one or more combinations hereof. This will simplify its/their addition.

Preferably a solution or a suspension of one or more of these components in water is used to bring the feed pellets into contact with these supplementary components in step(s) b) and/or f). It will however be clear that other solvents or mixtures hereof may be used. Contacting can be effected by using one or more method(s), for example spraying or immersion, or one or more other method(s).

Preferably the amount of fat added during step b) is such that the total fat content of the feed pellet after extrusion step c) will be at least 0.5 and at most 15 wt.%, preferably at most 10 wt.% and above all at most 5 wt.%. If a greater amount of fat is used in step b), problems will occur concerning the processability of the feed pellets. It will moreover be difficult to obtain a feed pellet having the desired density.

Preferably 0.1 to 5 wt.% water and preferably 1 to 10 wt.% steam are added during step b). This will result in a product having a composition that will ensure optimum processability in extrusion step c).

Before being added to the feed pellet in step d), the fat-containing composition is heated to a temperature at which the fat-containing composition is liquid. The temperature will hence depend on the melting point or the melting range of the employed fat, or the melting points and/or melting ranges of the employed fats. In a preferred embodiment of the present method step d) is carried out at a temperature of the fat-containing composition ranging between 20 and 70 °C, preferably 35-60 °C.

In another embodiment of the present invention step d) is carried out at a pressure ranging between 0.1 and 0.8 bar, preferably 0.2-0.4 bar. The present inventors have found that use of such a pressure results in good impregnation of the fat-containing composition in the feed pellet.

In yet another embodiment of the present invention step d) is carried out at a residence time ranging between 10 and 60 seconds, preferably 20-30 seconds. The advantage of this is that an optimum balance is then obtained between the homogeneity of the fat-containing composition throughout the feed pellets on the one hand, and process efficiency on the other. If a residence time of less than 10 seconds is used, a less homogeneous distribution of the fat-containing composition throughout the individual feed pellets and among different feed pellets will be obtained. If a residence time of more than 60 seconds is used, the overall process will be less efficient. A particularly good balance as described above will be obtained at a residence time between 20 and 30 seconds.

It is preferable for the fat-containing composition to be added in step d) after a vacuum has been created. This means that the feed pellets obtained in step c) must first be vacuumed, after which the fat-containing composition is added. The advantage of this is that the fat-containing composition will be uniformly introduced, and the air contained in the pores of the feed pellet will be expelled before the feed pellet will be brought into contact with the fat-containing composition to promote impregnation of the fat-containing composition in the pores of the feed pellet.

The size of the feed pellets obtained after extrusion in step c) (before coating) is preferably at most 1.2 cm. If larger feed pellets are obtained, they will cause problems concerning their edibility by the animals. The feed pellets obtained through extrusion in step c) may have any desired shape, for example square, round, oval or rectangular.

It is desirable for step c) to comprise two successive substeps, c1) and c2), with the temperature of substep c2) being higher than the temperature of substep c1), in particular a temperature ranging between 50 and 100°C in substep c1) and a temperature ranging between 110 and 175°C in substep c2).

By selecting a temperature between 50 and 100°C for substep c1), optimum conditions will be created for hydrating and pasteurising the product. At temperatures below 50°C no, or only little, hydration and pasteurisation will take place, whereas temperatures above 100°C combined with a long residence time may cause substantial loss of nutrients.

A temperature of between 110 and 175°C is to be selected for the subsequent substep c2) to further pasteurise and boil the product. At a temperature below 110 °C the product will be insufficiently boiled and pasteurised, whereas a temperature above 175 °C may cause the quality of the product to deteriorate.

The residence time in substep c1) is preferably longer than the residence time in substep c2), the residence time in step c1) preferably being 1.5 minutes, in particular 2 minutes and above all 2.5 minutes, and the residence time in substep c2) ranging between 0.5 and 20 seconds, preferably between 2 and 10 seconds and above all between 3 and 5 seconds.

The residence time in substep c1) is to be selected so that good hydration and homogenisation of the mixture obtained in step b) is achieved.

Preferably a short residence time is selected for substep c2), to minimise the loss of nutrients. The residence time must however be long enough to ensure that the product is sufficiently boiled and pasteurised.

Experimental results of tests at an experimental farm have shown that pigs respond very well to the use of the present feed pellets. See the examples for details.

It will be clear to a person skilled in the art that the use of the present feed pellets mentioned in the examples is not limited to pigs, but also includes other animals, for example cattle, goats, sheep, horses, dogs and fish.

The present invention will now be further elucidated with reference to examples and a comparative example, which will further explain the advantages according to the present invention. Further embodiments of the present invention will be given in the claims. The preferred embodiments given for the feed pellet in the description and the claims also apply to the method and vice versa.

### Analytical methods

### Density

The density of the feed pellets, also referred to as bulk density, is determined according to ISO 7971-2. According to this procedure the sample of feed pellets to be analysed is homogenised and used to completely fill a tube having a volume of 1 litre with loosely poured material. The difference in weight (grams) between the empty tube and the tube filled with homogenised feed pellets gives the density in grams per litre.

### Sedimentation value

The sedimentation value of the feed pellets is determined as follows. The sample of feed pellets to be analysed is homogenised. 50 ± 0.1 grams of the homogenised feed pellets is transferred to a 400-ml beaker and 200 + 0.1 grams of water at room temperature is added. The mixture is allowed to stand for 30 minutes, after which it is stirred for 30 seconds using a spatula. The suspension thus obtained is transferred to a 250-ml measuring cylinder and after 30 minutes the levels of (sediment + supernatant liquid) and the sediment are measured. The difference between these two values, (sediment + supernatant liquid) - sediment, is the amount of supernatant liquid, referred to as the sedimentation value. The results of the sedimentation value are shown in Tables 1 and 2. The lower the sedimentation value, the more stable the formed suspension will be.

### Swelling capacity

The swelling capacity of the feed pellets in water is determined as follows. The sample of feed pellets to be analysed is homogenised and 50 + 0.1 grams of the sample is transferred to a 250-ml measuring cylinder. The level of the loosely poured sample of homogenised feed pellets is measured and then 200 ± 0.1 grams of water of 40°C is added to it. The change in the level of the loosely poured sample is recorded as a function of time for 30 minutes.

### Examples

### Example 1

Provided in step a) is 140 kg of a composition comprising extracted soymeal, extracted sunflower seed, beet pulp, wheat, palm kernel expellers, wheat gluten feed meal, wheat middlings, barley, tapioca, pig fat and soy oil, plus organic acids, amino acids, minerals, vitamins and trace elements. The composition thus obtained had a starch content of about 34.4 wt.%. Next, the composition obtained was ground to obtain a product having an average particle size of 620 µm, after which the ground product was for 2.5 minutes mixed with supplementary components, viz. 1% fat, 1.5% water, 9% steam, relative to the weight of the composition of step a), until the mixture reached a temperature of 90 °C. The product was then heated, with further mixing, to a temperature of 130 °C, the extrusion step c) resulting in feed pellets measuring 3.5 - 4 mm (UPC technique). After the extruded feed pellets had cooled, a diluted (<1 wt.%) aqueous enzyme solution was sprayed over the feed pellets. Next, the fat-containing composition was added in a vacuum coater up to a total fat content of 9.5 wt.%, based on the end product, to obtain as the end product the present high-energy feed pellets having an EV of 1.40 and a total fat percentage of 15.5 wt.%. The results of the analytical methods are shown in Table 1.

### Example 2

A feed pellet was produced as in example 1, with the amount of fat-containing composition added being such that the end product had a total fat content of 15 wt.% in order to obtain a feed pellet having a total fat percentage of 21 wt.%. The results of the analytical methods are shown in Table 1.

### Example 3 (comparative)

A feed pellet was obtained by compressing a composition comprising extracted soymeal, extracted sunflower seed, wheat, palm kernel expellers, wheat gluten feed meal, wheat middlings, barley and tapioca, plus organic acids, amino acids, minerals, enzymes, vitamins, trace elements and fat. The final product had a total fat content of 5 wt.% and an EV of 1.10 . The results of the analytical methods are shown in Table 1.

### Example 4 (comparative).

These feed pellets were extruded feed pellets as in Example 1 to which a fat-containing composition was added in a vacuum coater up to a total fat content of 18 wt.%, based on the end product. These feed pellets have nutritional values comparable to the nutritional values of the feed pellets of example 1 and 2. The pellets were manufactured in such a way as to obtain a feed pellet with a swelling capacity of 18.

### Example 5 (comparative).

These feed pellets were made according to example 1 with the exception that less fat was added to the pellets in the vacuum coater hence resulting in a feed pellet with a low total fat percentage of 5 wt %.

### Example 6 (comparative).

A feed pellet was obtained according to example 3 with the exception that a fat-containing composition was added during the preparation. This resulted in feed pellets which were to sticky for automated production or to be handled with automated feeding systems. These pellets cause clogging of the automated production system or automated feeding systems.

**Table 1**

| Example | total fat % | density g/l | swelling capacity after 10 minutes | sedimentation after 30 minutes |
|---|---|---|---|---|
| 1 | 15.5 | 550 | 43 | 6 |
| 2 | 21 | 620 | 20 | 45 |
| 3* | 5 | 660 | 53 | 63 |
| 4* | 18 | 620 | 18 | 66 |
| 5* | 5 | 490 | 67 | 10 |
| 6* | 16 | 680 | 16 | 64 |

| | | | | |
|---|---|---|---|---|
| * = comparative example | | | | |

From the above Table 1 it is clear that the feed pellets obtained using the method according to the present invention have a high fat content and at the same time retain good properties in the fields of swelling capacity and sedimentation value. It is not possible to obtain feed pellets having comparable fat percentages using conventional compression techniques. Research carried out by the present inventors as shown in Table 1 has shown that existing feed pellets (produced via compression) having a total fat percentage of 5 wt.% yield swelling capacity results that are comparable with those of the present feed pellets having a fat percentage of 15.5 or even 21 wt.%. So the present invention provides an excellent feed pellet having a substantially increased energy value at comparable swelling capacity results. The sedimentation value of comparative example 3 is undesirably high at the low fat percentage of 5 wt.%. The examples according to the invention exhibit a lower sedimentation value at higher fat percentages, which is desirable.

### Example 7. Use in feeding fattening pigs

A number of pigs at an experimental farm were fed two different feeds. The pigs were first fed a so-called 'starting feed' until they reached a weight of 50 kg. The pigs were then fed a so-called 'finishing feed', viz. the feed pellets according to example 1 or the feed pellets according to comparative example 3, until the pigs were slaughtered. The starting feed used for the pigs that were fed the feed according to example 1 was a feed comparable with the feed according to example 1, to which no supplementary fat-containing composition had been added and which had a total fat percentage of 9 wt.%. The starting feed that was used for the pigs that were fed the feed according to comparative example 3 was a conventional silage having a fat percentage of 3.5 wt.%. The average results of three tests are shown in Table 2.

**Table 2**

| | Example 1 | Example 3* |
|---|---|---|
| Initial weight (kg) | 22.9 | 22.8 |
| Final weight (kg) | 115.1 | 112.7 |
| Feed uptake (kg/day) | 1.72 | 2.11 # |
| Growth (gr/day) | 835 | 791 |
| Feed conversion | 2.06 | 2.66 # |
| Energy conversion | 2.81 | 2.93 |
| Carcass dressing percentage (%) | 80.9 | 79.3 # |

| | | |
|---|---|---|
| * Comparative example # significant difference, P < 0.001 | | |

From Table 2 it will be clear that when use was made of the feed pellets according to example 1 the feed uptake was significantly lower and the feed conversion (the amount of feed in kg required for 1 kg's growth) and the carcass dressing percentage (slaughtered weight divided by live weight x 100%) were significantly better. The energy conversion (the amount of EV required for 1 kg's growth) was also better. The feed conversion and energy conversion are indices of the degree of utilisation of the feed by the animal. The carcass dressing percentage provides an indication of the amount of intestines, in particular the digestive system. Also observed were a decrease in the production of manure and a substantial improvement in the utilisation of nitrogen and phosphorus when using feed pellets according to the state of the art.

One or more of the above objects is/are thus achieved by the present invention.

**Table 3**

| | Example 2 | Example 4* | Example 5* |
|---|---|---|---|
| Initial weight (kg) | + | - | - |
| Final weight (kg) | + | - | - |
| Feed uptake (kg/day) | + | - | - |
| Growth (gr/day) | + | - | - |
| Feed conversion | + | - | - |
| Energy conversion | + | - | - |
| Carcass dressing percentage (%) | + | - | - |

| | | | |
|---|---|---|---|
| * Comparative example + = results at least as good as the results obtained with example 1 (shown in table 2). - = results worse than the results obtained with comparative example 3 (shown in table 2). | | | |

In table 3 results are shown as compared to the results as depicted in table 2. Example 6 was not tested due to its sticky properties. From table 3 it will be clear that a feed pellet according to example 2 shows results which are comparable to those obtained with the feed pellets according to example 1 (as shown in table 2). The results of comparative examples 4 and 5 were worse than the results obtained with feed pellets according to comparative example 3 (as shown in table 2). Table 2 and 3 clearly show no inventive concept of a feed pellet according to the present invention (example 1 and 2).

## Claims

1. A high-energy feed pellet based on natural materials, wherein the total fat percentage of the feed pellet is more than 15 wt.%, **characterised in that** the feed pellet has a density of at most 700 g/l, and a swelling capacity of at least 40 ml after 30 minutes, based on 50 g of feed pellets.

2. A high-energy feed pellet according to claim 1, **characterised in that** the total fat percentage is at most 30 wt.%.

3. A high-energy feed pellet according to claim 1, **characterised in that** the total fat percentage is at most 20 wt.%.

4. A high-energy feed pellet according to one or more of claims 1-3, **characterised in that** the feed pellet has a density of at most 630 g/l.

5. A high-energy feed pellet according to one or more of claims 1-4, **characterised in that** the swelling capacity of the feed pellet is at least 30 ml after 20 minutes, preferably at least 20 ml after 10 minutes, based on 50 g of feed pellets.

6. A high-energy feed pellet according to one or more of claims 1-5, **characterised in that** the sedimentation value of the feed pellet after 30 minutes is at most 60 ml, based on 50 g of feed pellets.

7. A high-energy feed pellet according to claim 6, **characterised in that** the sedimentation value of the feed pellet after 30 minutes is at most 25 ml, based on 50 g of feed pellets.

8. A high-energy feed pellet according to one or more of claims 1-7, **characterised in that** the feed pellet comprises a fat selected from the group consisting of animal fats, vegetable fats, vegetable oils and vegetable fatty acids. Amendments with Letter of June 8, 2012 (typed up version)

9. A high-energy feed pellet according to one or more of claims 1-8, **characterised in that** the energy value (EV) is at least 1.25, preferably at least 1.55, more preferably at least 1.70, in particular at least 1.85 and above all 2.00 per kilogram of feed pellets, with 1 EV corresponding to 2100 kcal.

10. A method for the preparation of a high-energy feed pellet according to any one of the preceding claims, said high-energy feed pellet being based on natural materials in which the starting materials are mixed and processed to obtain a feed pellet, **characterised in that** the method comprises the following steps:
a) providing a starch-containing composition having an average particle size of 200-650 µm;
b) bringing the composition of step a) into contact with a certain amount of supplementary components;
c) extruding the product obtained in step b) to obtain a feed pellet;
d) introducing a fat-containing composition into the feed pellet obtained in step c) in a vacuum; and
e) bringing the feed pellet obtained in step d) to atmospheric pressure in order to obtain the high-energy feed pellet having a total fat percentage of more than 15 wt.%.

11. A method according to claim 10, **characterised in that** step d) is carried out at a temperature of the fat-containing composition ranging between 20 and 70 °C, preferably 35-60 °C.

12. A method according to either one or both of claims 10-11, **characterised in that** step d) is carried out at a pressure ranging between 0.1 and 0.8 bar, preferably 0.2-0.4 bar.

13. A method according to one or more of claims 10-12, **characterised in that** step d) is carried out at a residence time ranging between 10 and 60 seconds, preferably 20-30 seconds. Amendments with Letter of June 8, 2012 (typed up version)

14. A method according to one or more of claims 10-13, **characterised in that** after step c) an extra step, f), is carried out, comprising:
f) bringing the feed pellet obtained in step c) into contact with one or more supplementary components.

15. A method according to one or more of claims 10-14, **characterised in that** bringing the product to atmospheric pressure in step e) is carried out step by step.

16. A method according to one or more of claims 10-15, **characterised in that** the fat content of the fat-containing composition is at least 75 wt.%, prefer-ably at least 85 wt.%, in particular at least 95 wt.% and above all at least 99 wt.%.

17. A method according to one or more of claims 10-16, **characterised in that** the fat-containing composition contributes at least 50 %, preferably at least 70 %, in particular at least 80 % and above all at least 90 % to the total fat content of the feed pellet.

18. Use of the high-energy feed pellet according to one or more of claims 1-9 or obtained using a method according to one or more of claims 10-17 as feed for an animal selected from the group consisting of pig, cattle goat, sheep, horse, dog, and fish.

## Patentansprüche

1. Energiereiches Futtermittelpellet, das auf natürlichen Stoffen basiert, wobei der Gesamt-Fettanteil des Futtermittelpellets über 15 Gew.-% beträgt, **dadurch gekennzeichnet, dass** das Futtermittelpellet eine Dichte von höchstens 700 g/l und eine auf 50 g Futtermittelpellets basierende Quellfähigkeit von höchstens 40 ml nach 30 Minuten aufweist.

2. Energiereiches Futtermittelpellet nach Anspruch 1, **dadurch gekennzeichnet, dass** der Gesamt-Fettanteil höchstens 30 Gew.-% ist.

3. Energiereiches Futtermittelpellet nach Anspruch 1, **dadurch gekennzeichnet, dass** der Gesamt-Fettanteil höchstens 20 Gew.-% ist.

4. Energiereiches Futtermittelpellet nach einem oder mehreren der Ansprüche 1-3, **dadurch gekennzeichnet, dass** das Futtermittelpellet eine Dichte von höchstens 630 g/l hat.

5. Energiereiches Futtermittelpellet nach einem oder mehreren der Ansprüche 1-4, **dadurch gekennzeichnet, dass** die auf 50 g Futtermittelpellets basierende Quellfähigkeit des Futtermittelpellets wenigstens 30 ml nach 20 Minuten beträgt, vorzugsweise wenigstens 20 ml nach 10 Minuten.

6. Energiereiches Futtermittelpellet nach einem oder mehreren der Ansprüche 1-5, **dadurch gekennzeichnet, dass** der auf 50 g Futtermittelpellets basierende Sedimentierungswert des Futtermittelpellets nach 30 Minuten höchstens 60 ml beträgt.

7. Energiereiches Futtermittelpellet nach Anspruch 6, **dadurch gekennzeichnet, dass** der auf 50 g Futtermittelpellets basierende Sedimentierungswert des Futtermittelpellets nach 30 Minuten höchstens 25 ml beträgt.

8. Energiereiches Futtermittelpellet nach einem oder mehreren der Ansprüche 1-7, **dadurch gekennzeichnet, dass** das Futtermittelpellet ein aus der aus Tierfetten, Pflanzenfetten, Pflanzenölen und Pflanzenfettsäuren bestehenden Gruppe ausgewähltes Fett aufweist.

9. Energiereiches Futtermittelpellet nach einem oder mehreren der Ansprüche 1-8, **dadurch gekennzeichnet, dass** der Energiewert (EV) wenigstens 1,25, vorzugsweise wenigstens 1,55, noch bevorzugter wenigstens 1,7, insbesondere wenigstens 1,85 und vor allem 2,0 pro Kilogramm Futtermittelpellets beträgt, wobei 1 EV 2100 kcal entspricht.

10. Verfahren zur Herstellung eines energiereichen Futtermittelpellets nach einem oder mehreren der vorhergehenden Ansprüche, wobei das energiereiche Futtermittelpellet auf natürlichen Stoffen basiert, bei dem die Ausgangsstoffe gemischt und verarbeitet werden, um ein Futtermittelpellet zu erhalten, **dadurch gekennzeichnet, dass** das Verfahren die folgenden Schritte umfasst:
a) Bereitstellen einer Stärke enthaltenden Mischung, die eine durchschnittliche Partikelgröße von 200-650 µm hat,
b) In-Kontakt-bringen der Mischung aus Schritt a) mit einer gewissen Menge zusätzlicher Komponenten,
c) Extrudieren des in Schritt b) erhaltenden Produkts, um ein Futtermittelpellet zu erhalten,
d) Einbringen einer Fett enthaltenden Mischung in das in Schritt c) erhaltende Futtermittelpellet unter einem Vakuum, und
e) Bringen des in Schritt d) erhaltenden Futtermittelpellets auf Atmosphärendruck, um das energiereiche Futtermittelpellet zu erhalten, das einen Gesamt-Fettanteil von über 15 Gew.-% aufweist.

11. Verfahren nach Anspruch 10, **dadurch gekennzeichnet, dass** Schritt d) bei einer Temperatur der Fett enthaltenden Mischung zwischen 20 und 70 °C durchgeführt wird, vorzugsweise 35-60 °C.

12. Verfahren nach einem der Ansprüche 10 oder 11, **dadurch gekennzeichnet, dass** Schritt d) bei einem Druck zwischen 0,1 und 0,8 bar durchgeführt wird, vorzugsweise 0,2-0,4 bar.

13. Verfahren nach einem oder mehreren der Ansprüche 10-12, **dadurch gekennzeichnet, dass** Schritt d) bei einer Einwirkzeit zwischen 10 und 60 Sekunden durchgeführt wird, vorzugsweise 20-30 Sekunden.

14. Verfahren nach einem oder mehreren der Ansprüche 10-13, **dadurch gekennzeichnet, dass** nach Schritt c) ein zusätzlicher Schritt f) durchgeführt wird, mit:
f) In-Kontakt-bringen des in Schritt c) erhaltenden Futtermittelpellets mit einem oder mehreren zusätzlichen Komponenten.

15. Verfahren nach einem oder mehreren der Ansprüche 10-14, **dadurch gekennzeichnet, dass** das Bringen des Produkts auf Atmosphärenduck in Schritt e) schrittweise durchgeführt wird.

16. Verfahren nach einem oder mehreren der Ansprüche 10-15, **dadurch gekennzeichnet, dass** der Fettanteil der Fett enthaltenden Mischung wenigstens 75 Gew.-% ist, vorzugsweise wenigstens 85 Gew.-%, insbesondere wenigstens 95 Gew.-% und vor allem wenigstens 99 Gew.-%.

17. Verfahren nach einem oder mehreren der Ansprüche 10-16, **dadurch gekennzeichnet, dass** die Fett enthaltende Mischung wenigstens 50% zu dem Gesamt-Fettanteil des Futtermittelpellets beiträgt, vorzugsweise wenigstens 70%, insbesondere wenigstens 80% und vor allem wenigstens 90%.

18. Verwendung des energiereichen Futtermittelpellets nach einem oder mehreren der Ansprüche 1-9 oder erhalten durch Verwendung eines Verfahrens nach einem oder mehreren der Ansprüche 10-17 als Futter für ein aus der aus Schwein, Rind, Ziege, Schaf, Pferd, Hund und Fisch bestehenden Gruppe ausgewähltes Tier.

## Revendications

1. Granulé d'alimentation à forte teneur énergétique à base de matières naturelles, dans lequel le pourcentage total de matière grasse du granulé d'alimentation est supérieur à 15 % en poids, **caractérisé en ce que** le granulé d'alimentation a une masse volumique d'au plus 700 g/L, et une capacité de gonflement d'au moins 40 mL après 30 minutes, sur la base de 50 g de granulés d'alimentation.

2. Granulé d'alimentation à forte teneur énergétique selon la revendication 1, **caractérisé en ce que** le pourcentage total de matière grasse est d'au plus 30 % en poids.

3. Granulé d'alimentation à forte teneur énergétique selon la revendication 1, **caractérisé en ce que** le pourcentage total de matière grasse est d'au plus 20 % en poids.

4. Granulé d'alimentation à forte teneur énergétique selon une ou plusieurs des revendications 1 à 3, **caractérisé en ce que** le granulé d'alimentation a une masse volumique d'au plus 630 g/L.

5. Granulé d'alimentation à forte teneur énergétique selon une ou plusieurs des revendications 1 à 4, **caractérisé en ce que** la capacité de gonflement du granulé d'alimentation est d'au moins 30 mL après 20 minutes, de préférence d'au moins 20 mL après 10 minutes, sur la base de 50 g de granulés d'alimentation.

6. Granulé d'alimentation à forte teneur énergétique selon une ou plusieurs des revendications 1 à 5, **caractérisé en ce que** la valeur de sédimentation du granulé d'alimentation après 30 minutes est d'au plus 60 mL, sur la base de 50 g de granulés d'alimentation.

7. Granulé d'alimentation à forte teneur énergétique selon la revendication 6, **caractérisé en ce que** la valeur de sédimentation du granulé de sédimentation après 30 minutes est d'au plus 25 mL, sur la base de 50 g de granulés d'alimentation.

8. Granulé d'alimentation à forte teneur énergétique selon une ou plusieurs des revendications 1 à 7, **caractérisé en ce que** le granulé d'alimentation comprend une matière grasse choisie dans le groupe consistant en les matières grasses animales, les matières grasses végétales, les huiles végétales et les acides gras végétaux.

9. Granulé d'alimentation à forte teneur énergétique selon une ou plusieurs des revendications 1 à 8, **caractérisé en ce que** la valeur énergétique (VE) est d'au moins 1,25, de préférence d'au moins 1,55, de manière davantage préférée d'au moins 1,70, en particulier d'au moins 1,85 et de manière préférée entre toutes de 2,00 par kilogramme de granulés d'alimentation, 1 VE correspondant à 2 100 kcal.

10. Procédé de préparation d'un granulé d'alimentation à forte teneur énergétique selon l'une quelconque des revendications précédentes, ledit granulé d'alimentation à forte teneur énergétique étant à base de matières naturelles dans lesquelles les matières de départ sont mélangées et traitées pour obtenir un granulé d'alimentation, **caractérisé en ce que** le procédé comprend les étapes suivantes :
a) la fourniture d'une composition contenant de l'amidon ayant une taille moyenne de particule de 200 à 650 µm ;
b) la mise de la composition de l'étape a) en contact avec une certaine quantité de composants supplémentaires ;
c) l'extrusion du produit obtenu à l'étape b) pour obtenir un granulé d'alimentation;
d) l'introduction d'une composition contenant de la matière grasse dans le granulé d'alimentation obtenu à l'étape c) dans un vide ; et
e) la mise du granulé d'alimentation obtenu à l'étape d) à la pression atmosphérique afin d'obtenir le granulé d'alimentation à forte teneur énergétique ayant un pourcentage total de matière grasse de plus de 15 % en poids.

11. Procédé selon la revendication 10, **caractérisé en ce que** l'étape d) est réalisée à une température de la composition contenant de la matière grasse dans la plage entre 20 et 70 °C, de préférence 35 à 60 °C.

12. Procédé selon l'une quelconque des revendications 10 et 11 ou les deux, **caractérisé en ce que** l'étape d) est réalisée à une pression dans la plage entre 0,1 et 0,8 bar, de préférence 0,2 à 0,4 bar.

13. Procédé selon une ou plusieurs des revendications 10 à 12, **caractérisé en ce que** l'étape d) est réalisée à un temps de séjour dans la plage entre 10 et 60 secondes, de préférence 20 à 30 secondes.

14. Procédé selon une ou plusieurs des revendications 10 à 13, **caractérisé en ce qu'**après l'étape c), une étape f) additionnelle est réalisée, comprenant :
f) la mise du granulé d'alimentation obtenu à l'étape c) en contact avec un ou plusieurs composants supplémentaires.

15. Procédé selon une ou plusieurs des revendications 10 à 14, **caractérisé en ce que** la mise du produit à la pression atmosphérique à l'étape e) est réalisée étape par étape.

16. Procédé selon une ou plusieurs des revendications 10 à 15, **caractérisé en ce que** la teneur en matière grasse de la composition contenant de la matière grasse est d'au moins 75 % en poids, de préférence d'au moins 85 % en poids, en particulier d'au moins 95 % en poids, et de manière préférée entre toutes d'au moins 99 % en poids.

17. Procédé selon une ou plusieurs des revendications 10 à 16, **caractérisé en ce que** la composition contenant de la matière grasse contribue à au moins 50 %, de préférence au moins 70 %, en particulier au moins 80 % et de manière préférée entre toutes au moins 90 % à la teneur totale en matière grasse du granulé d'alimentation.

18. Utilisation du granulé d'alimentation à forte teneur énergétique selon une ou plusieurs des revendications 1 à 9 ou obtenu à 1"aide d'un procédé selon une ou plusieurs des revendications 10 à 17 en tant qu'aliment pour un animal choisi dans le groupe consistant à en le porc, la chèvre, le mouton, le cheval, le chien et le poisson.
